# DEMANDE DE BREVET EUROPEEN

(11) **EP 2 712 785 A1**
(43) Date de publication de la demande: **02.04.2014**
(21) Numéro de dépôt: 12290319.8
(22) Date de dépôt: 27.09.2012
(51) Int. Cl.: B61L 15/00, G08B 13/196, H04N 7/18, B61L 23/00

(54) **Méthode de surveillance d'un ensemble de véhicules d'un système de transport public**

(71) Demandeur: Siemens SAS, 93200 St. Denis (FR)
(72) Inventeur: Faure, Andre, 92120 Montrouge (FR)
(74) Mandataire: Fischer, Michael

(57) **Abrégé**

La présente invention décrit une méthode et un dispositif de surveillance d'un ensemble de véhicules d'un système de transport public. Chaque véhicule comprend au moins une caméra faisant une acquisition d'une image en temps réel d'au moins une partie de cabine dudit véhicule. L'invention prévoit que l'image est transmise à au moins un moniteur de visionnage embarqué dans au moins un autre véhicule et disposé à portée de vue de passagers. De cette façon, la méthode de surveillance est rendue plus autonome, simple et étendue.

## Description

La présente invention concerne une méthode de surveillance d'un ensemble de véhicules d'un système de transport public selon le préambule de la revendication 1.

Actuellement, il est connu qu'il existe des méthodes de surveillance d'un ensemble de véhicules d'un système de transport public, chaque véhicule comprenant au moins une caméra faisant une acquisition d'une image en temps réel d'au moins une partie de cabine dudit véhicule. Les images acquises sont généralement transmises à un poste de contrôle central où des opérateurs visualisent des données en temps réel afin de pouvoir y détecter une panne, un accident, un délit ou tout autre acte ou événement anormal.

La terminologie véhicule désigne ici tout unité roulante en terme de cabine ou voiture pour passagers, lesdites unités étant couplées afin de former le système de transport tel qu'un trolley, un métro, un train, etc.

En supposant que chaque véhicule possède deux caméras et qu'un opérateur doit par exemple surveiller 10 trains ayant chacun 10 véhicules, il doit ainsi observer 200 images instantanées. Ceci est donc un exercice quasi-impossible et il est nécessaire de soulager les opérateurs de cette charge.

Un but de la présente invention est donc de rendre plus autonome, simple et étendue une méthode de surveillance d'un ensemble de véhicules d'un système de transport public, chaque véhicule comprenant au moins une caméra faisant une acquisition d'une image en temps réel d'au moins une partie de cabine dudit véhicule. Au même titre, un dispositif de surveillance permettant de mettre en oeuvre la méthode devrait aussi être proposé.

Une telle méthode est ainsi proposée au travers des caractéristiques de la revendication 1. Egalement, un dispositif de surveillance permettant de mettre en oeuvre la méthode est proposé au travers des caractéristiques de la revendication 7.

A partir d'une méthode de surveillance d'un ensemble de véhicules d'un système de transport public, chaque véhicule comprenant au moins une caméra faisant une acquisition d'une image en temps réel d'au moins une partie de cabine dudit véhicule, la méthode selon l'invention se caractérise en ce que l'image est transmise à au moins un moniteur de visionnage embarqué dans au moins un autre véhicule et disposé à portée de vue de passagers.

Ainsi, chaque passager joue fort avantageusement le rôle d'un opérateur bénévole et peut ainsi détecter toute anomalie ou acte délictueux dans un autre véhicule que le sien. Si il aperçoit une telle anomalie ou violence, il peut ainsi alarmer/alerter le poste de contrôle central ou bien la police.

Sachant qu'il y le plus souvent plusieurs passagers répartis dans plusieurs véhicules d'un train par exemple, ces dits passagers forment aussi plusieurs opérateurs bénévoles au lieu d'un seul opérateur surveillant d'un poste de contrôle central. La surveillance est donc rendue plus autonome car elle peut s'affranchir de surveillants professionnels au poste de contrôle, et est de plus intensifiée car étendue à plusieurs surveillants.

Enfin, un autre avantage de la méthode selon l'invention est aussi de permettre aux passagers d'un véhicule de pouvoir visualiser si d'autres véhicules sont occupés. Cela permet de pouvoir éventuellement de changer de véhicule (par intercirculation ou à une station d'arrêt) si le taux d'occupation d'un véhicule est trop élevé alors qu'un autre véhicule présente des placés libres. Enfin, cela permet aussi, en particulier aux heures tardives que des passagers se regroupent dans un véhicule avec un taux d'occupation normal afin de ne pas rester isolé dans un véhicule et donc plus vulnérable.

Afin de mettre la méthode selon l'invention en oeuvre, un dispositif de surveillance est également proposé. Ce dispositif de surveillance d'au moins deux - ici premier et second - véhicules de transport public, chacun des véhicules comprend :
- au moins une caméra faisant une acquisition d'une image en temps réel d'au moins une partie de cabine dudit véhicule,
- au moins un moniteur à portée de vue de passagers,
et se caractérise en ce que la caméra du premier véhicule transmet une image acquise vers le moniteur du second véhicule et la caméra du second véhicule transmet une image acquise vers le moniteur du premier véhicule.

Par ce biais, la caméra d'un des véhicules est couplée en circuit fermé avec un ou plusieurs moniteurs d'un autre ou d'autres véhicules, permettant ainsi une transmission vidéo externe à son véhicule et donc aussi la surveillance délocalisée par des passagers distribués dans plusieurs véhicules, comme prévu initialement par la méthode selon l'invention.

Un ensemble de sous-revendications présente également des avantages de l'invention.

Un exemple de réalisation du dispositif en vue d'une d'application de la méthode est fourni à l'aide d'une figure:

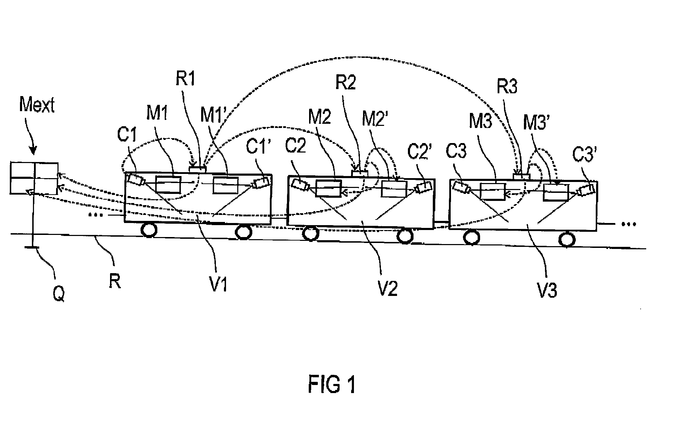

- Figure 1: Exemple de dispositif selon l'invention permettant d'illustrer la mise en oeuvre de la méthode selon l'invention.

Figure 1 présente un exemple simple de dispositif selon l'invention permettant d'illustrer la mise en oeuvre de la méthode de surveillance selon l'invention.

Le dit dispositif de surveillance d'au moins deux véhicules de transport public - ici trois véhicules couplés (V1, V2, V3) d'un train -, prévoit que chacun des véhicules comprend :
- au moins une caméra (C1, C1' ; C2, C2' ; C3, C3') faisant une acquisition d'une image en temps réel d'au moins une partie de cabine dudit véhicule,
- au moins un moniteur (M1, M1' ; M2, M2' ; M3, M3') à portée de vue de passagers dans chacune des cabines de véhicules. Enfin le dispositif se caractérise en ce que, par exemple, la caméra (C1) du premier véhicule (V1) transmet une image acquise vers au moins un des moniteurs (M2, M2') d'au moins le second véhicule (V2) et, ici encore pour exemple, la caméra (C2) du second véhicule (V2) transmet une image acquise vers au moins un des moniteurs (M1, M1') du premier véhicule (V1).

Le dispositif selon l'invention prévoit que la transmission des images entre caméra d'un des véhicules et moniteur d'un ou d'autres véhicules ou au sol peut être avantageusement aérienne, partiellement (parties filaires possibles) voire complètement, en particulier au moyen d'un réseau radio comme de type WiFi ou tout autre type de liaison aérienne. Ceci évite de devoir installer des connexions filaires et l'intégration du dispositif de surveillance peut ainsi même être réalisée sur des infrastructures existantes « caméra/moniteur/routeur/unité de commande-gestion ». En effet, actuellement des véhicules de train, métro, trolley, etc. sont équipés de tels composantes et il y aisé de mettre en place un algorithme de l'unité de commande-gestion des caméras/moniteurs/routeurs de chaque véhicule afin de mettre en oeuvre la méthode de surveillance selon l'invention par voie aérienne au moyen du dit dispositif. A cet effet, la figure 1 présente ainsi trois routeurs (R1, R2, R3), chacun d'entre eux étant disposé sur chacun un des trois véhicules et étant couplés entre eux par radio ainsi qu'avec les caméras et moniteurs du véhicule sur lequel ils sont disposés. De cette façon, selon un codage de routage prédéfini, il est possible d'échanger des vidéos d'un véhicule vers un ou plusieurs autres véhicules du train et vice-versa. Il est possible de prévoir des séquences de transmission décalée de façon à permettre que des passagers d'un véhicule puissent voir des vidéos successives de plusieurs autres véhicules. A la figure 1, les transmissions d'image sont matérialisées par des flèches en pointillés. Pour des raisons de clarté dans la figure 1, il n'est représenté qu'une seule transmission d'image depuis la première caméra (C1) du premier véhicule (V1) vers les moniteurs des autres véhicules (V2, V3) via des routeurs (R1, R2, R3) dédiés à chacun des véhicules (V1, V2, V3). Egalement, il est représenté une transmission de l'image provenant de la première caméra (C1) du premier véhicule (V1) vers un moniteur (Mext) hors véhicule et disposé sur un quai (Q) d'une station d'arrêt de train. Ici encore la transmission se fait de façon aérienne via le routeur (R1) et tout autre point d'accès intermédiaire au sol permettant un routage jusqu'au moniteur externe (Mext). De la même façon, chaque véhicule peut ainsi transmettre via son routeur dédié une image d'une des caméras à son bord vers ledit moniteur (Mext) à quai, en particulier si le dit moniteur peut afficher simultanément plusieurs vidéos de chacun des véhicules. La surveillance à bord du train est ainsi aussi accrue par la présence des passages sur un quai qui deviennent également des surveillants supplémentaires aux passagers des véhicules. Egalement, les passagers attendant le train pour y monter peuvent ainsi constater quels sont les véhicules qui disposent du plus grand nombre de places libres pour y être installés plus confortablement.

Optionnellement, un tel dispositif selon l'invention est aussi avantageusement adapté à un système de transport comprenant des véhicules dotés d'un passage d'intercirculation. En effet, si un passager ou même un surveillant ou vigil aperçoit une agression dans un autre véhicule, il peut alors très vite rejoindre le véhicule concerné et ainsi, si possible, abréger la durée de l'agression en neutralisant la situation. Dans un autre cas, s'il s'avère qu'un agresseur s'échappe au travers des passages d'intercirculation entre véhicules, il est possible de prévoir un mécanisme permettant à un passager ayant aperçu un délit de verrouiller le passage d'intercirculation de son véhicule afin de minimiser le nombre de victimes potentielles.

Le dispositif selon l'invention est ainsi apte à une mise en oeuvre de la méthode de surveillance d'un ensemble de véhicules (V1, V2, V3,...) d'un système de transport public, chaque véhicule comprenant au moins une caméra (C1, C2, ...) faisant une acquisition d'une image (I1, 12, ...) en temps réel d'au moins une partie de cabine dudit véhicule, ladite méthode se caractérisant en ce que l'image est transmise à au moins un moniteur (M1, M2, ...) de visionnage embarqué dans au moins un autre véhicule et disposé à portée de vue de passagers.

Même si la figure 1 présente deux moniteurs par véhicule, la méthode de surveillance selon l'invention est applicable alors que chacun des véhicules du système de transport comprend au moins un moniteur de visionnage. Si le nombre de moniteurs par véhicule est augmenté, plus de passagers peuvent observer et donc surveiller.

La méthode selon l'invention prévoit dans un mode simple de fonctionnement que l'image acquise dans un véhicule est transmise simultanément à plusieurs moniteurs d'autres véhicules (voir même à un des moniteurs de son véhicule, par exemple éloigné de la caméra ayant pris l'image), puis un roulement est effectué de façon à ce que ce que chaque caméra distribue successivement ses images-vidéo de la même façon.

Afin de faciliter une localisation de délit dans un ensemble de véhicules, la méthode selon l'invention prévoit que l'image affichée (sous forme de vidéo) comprend un indicateur du numéro de cabine de véhicule visionné. De cette façon, un passager d'un autre véhicule pourra indiquer la position du délit aux forces de l'ordre afin qu'elle le maitrise plus rapidement, par exemple en arrivée de station.

De façon plus sophistiquée, la méthode selon l'invention peut comprendre une étape d'intelligence artificielle pour laquelle l'image acquise est analysée par un module de reconnaissance de délit et délivre sur au moins un des moniteurs un indicateur visuel de délit en cas de détection de délit. Cet indicateur a pour but de faire porter une attention plus soutenue des passagers-surveillants sur un moniteur afin de confirmer si oui ou non il s'agit d'un délit ou plutôt d'une bousculade sans préjudice.

Analogiquement à ces derniers aspects, l'image acquise est transmise à un moniteur sur un quai ou un poste de contrôle central, et le moniteur indique en particulier un identificateur de véhicule d'où l'image provient. Bien entendu, il est plus simple et moins cher d'acheminer l'information des caméras vers un moniteur situé à proximité dans le même train, que de le transmettre à un poste de contrôle central de type PCC situé à plusieurs kilomètre de distance des caméras; évidemment, l'un n'empêche pas l'autre et la surveillance par passager peut être complétée par une surveillance au PCC ; mais si on se limite à la surveillance mutuelle par les passagers, il est alors possible de réaliser une forte économie en terme de bande passante utile aux transferts d'information des caméras entre les véhicules et le PCC (au mieux, il n'y a plus à transmettre que de la phonie, qui réclame beaucoup moins de bande passante que la vidéo).

Plus particulièrement, la méthode de surveillance selon l'invention comprenant un réseau de caméras et moniteurs embarqués (voire aussi au sol) qui communiquent en circuit fermé, cette méthode présente des aspects sécurisants en ce que :
● en cas d'agression, un passager d'un véhicule peut alerter soit en urgence soit discrètement le PCC central via un module d'intercommunication en cabine sans être vu des agresseurs situés dans un autre véhicule et sans risquer une mesure de rétorsion de leur part ;
● un pickpocket doit se méfier d'être vu non seulement des passagers du véhicule dans lequel il se trouve, mais également des caméras délivrant des images supplémentaires aux passagers des autres véhicules ;
● les agresseurs/voleurs n'étant pas au courant qu'une alerte a été donnée par un passager, il sera plus facile à la police de les arrêter.

Une autre façon de décrire un avantage du système de caméras en circuit fermé sous le principe de la méthode selon l'invention est de raisonner en nombre de surveillants: dans un PCC classique, il y a 1 à 3 postes vidéo sur lesquels sont affichées de façon aléatoire les images des caméras des trains: à raison de 20 caméras par train, 25 trains en circulation et deux écrans vidéo par opérateur pour les trains (d'autres écrans existant par ailleurs pour les quais), il y a 500 images trains à visualiser sur 4 à 6 écrans, sachant que les opérateurs ont par ailleurs d'autres tâches à effectuer.

Avec des caméras en circuit fermé sous le principe de la méthode selon l'invention, avec par exemple 4 caméras et deux écrans par voiture, il suffit dans chaque voiture de balayer les 16 autres caméras d'un train de 5 voitures. Le ratio entre caméras et images affichées quelque part dans le train est de seulement 2, au lieu de 100 dans le cas de la surveillance au PCC. En outre, il n'y a pas un seul opérateur à temps partiel, mais des dizaines de surveillants bénévoles potentiels, dont au moins une partie n'a rien d'autre à faire.

Ces considérations sur le nombre de surveillants permettent d'envisager un meilleur taux de vigilance vis à vis des problèmes de sécurité (vol, violence, bagages abandonnés, terrorisme).

## Revendications

1. Méthode de surveillance d'un ensemble de véhicules (V1, V2,...) d'un système de transport public, chaque véhicule comprenant au moins une caméra (C1., C2, ...)faisant une acquisition d'une image (I1, I2, ...) en temps réel d'au moins une partie de cabine dudit véhicule,
**caractérisée en ce que**
l'image est transmise à au moins un moniteur (M1, M2, ...) de visionnage embarqué dans au moins un autre véhicule et disposé à portée de vue de passagers.

2. Méthode selon revendication 1, pour laquelle chacun des véhicules du système de transport comprend au moins un moniteur de visionnage.

3. Méthode selon une des revendications 1 à 2, pour laquelle l'image est transmise simultanément à plusieurs moniteurs.

4. Méthode selon une des revendications précédentes, pour laquelle l'image comprend un indicateur du numéro de cabine de véhicule visionné.

5. Méthode selon une des revendications précédentes, pour laquelle l'image est analysée par un module de reconnaissance de délit et délivre un indicateur visuel de délit en cas de détection de délit.

6. Méthode selon une des revendications précédentes, pour laquelle l'image acquise est transmise à un moniteur sur un quai ou un poste de contrôle central, et le moniteur indique en particulier un identificateur de véhicule d'où l'image provient.

7. Dispositif de surveillance d'au moins deux véhicules (V1, V2,...) de transport public, chacun des véhicules comprenant :
- au moins une caméra (C1, C2,...) faisant une acquisition d'une image en temps réel d'au moins une partie de cabine dudit véhicule,
- au moins un moniteur (M1, M2,...) à portée de vue de passagers,
**caractérisé en ce que** la caméra (C1) du premier véhicule transmet une image acquise vers le moniteur (M2) du second véhicule et la caméra du second véhicule (C2) transmet une image acquise vers le moniteur (M1) du premier véhicule.

8. Dispositif selon revendication 7, pour lequel la transmission des images entre caméra d'un des véhicules et moniteur de l'autre véhicule ou au sol est aérienne, en particulier au moyen d'un réseau radio comme de type Wi-Fi.

9. Dispositif selon une des revendications 7 ou 8, pour laquelle le système de transport comprend des véhicules dotés d'un passage d'intercirculation.
